# EUROPEAN PATENT SPECIFICATION

(11) **EP 2 051 448 B1**
(45) Date of publication and mention of the grant of the patent: **10.09.2014**
(21) Application number: 07764284.1
(22) Date of filing: 26.07.2007
(51) Int. Cl.: H04L 12/28, H04W 48/16, H04W 74/00, H04L 12/931

(54) **ACCESS NETWORK SYSTEM WITH SEPARATED CONTROLLING AND BEARING AND COMMUNICATION ACHIEVING METHOD THEREOF**
ZUGANGSNETZSYSTEM MIT GETRENNTER STEUERUNG UND FÜHRUNG UND KOMMUNIKATIONSERZIELUNGSVERFAHREN DAFÜR
SYSTÈME DE RÉSEAU D'ACCÈS À COMMANDE ET TRANSPORT SÉPARÉS ET PROCÉDÉ DE TRANSMISSION CORRESPONDANT

(30) Priority: 11.08.2006 CN 200610112114
(43) Date of publication of application: 22.04.2009
(73) Proprietor: Huawei Technologies Co., Ltd., Longgang District, Shenzhen Guangdong 518129 (CN)
(72) Inventor: ZHENG, Ruobin, Shenzhen, Guangdong 518129 (CN); LI, Hongyu, Shenzhen, Guangdong 518129 (CN)
(74) Representative: Thun, Clemens
(86) International application number: PCT/CN2007/070362
(87) International publication number: WO 2008/022576

(56) References cited:
- EP-A- 1 372 346
- EP-A- 1 653 691
- WO-A1-00/79742
- CN-A- 1 753 510

## Description

### FIELD OF THE INVENTION

The present invention relates to access network technologies, and more particularly, to an access network system with separated control and bearer as well as method thereof for achieving communication.

### BACKGROUND

In the existing communication network architecture, control and bearer in an access network are not separated from each other. From the perspective of the whole network control, because different bearing techniques correspond to a different architecture and a different network control method for the access network, the convergence of access networks is impossible. When there are lots of service providers in the network who manage their own services separately, cross-region movement and handoff of a user are affected. Moreover, because access networks using different bearing techniques need to be managed respectively, the difficulty in implementing moving and handoff of a user among different access technologies is increased. From the perspective of devices in the network, if control and bearer are in the same bearing device, the bearing device includes lots of control functions, which increases the cost of the device tremendously. Furthermore, the performance of the control function is affected due to hardware limitation, and the control function is further affected when the bearing device changes, such as upgrading and scaling. Moreover, because the control function resides in the bearing device, the whole bearing device needs to be upgraded when new control function is required. Accordingly, the capital expense (CAPEX) and the operation expense (OPEX) are increased.

Other conventional approaches were also proposed.

EP 1372346 A is directed to a switching node which combines the functionalities of MSC/VLR and MSC-Server. The switching node is provided in a network which comprises a layered architectural environment, in which a split is provided between the user plane and the control plane, and a non-layered architectural environment, in which there is not such split. However, such solution is mainly applicable to radio access network.

Hence, there is a need to further increase the network extensibility and reduce the network maintenance cost.

### SUMMARY

In view of this, the present invention is to provide an access network system with control and bearer which are separated from each other. Such system may improve network extensibility and reduce the network maintenance cost.

The present invention is to further provide a method for implementing communications by an access network system with separated control and bearer, thus enabling users to implement communications by the access network of the present invention.

For achieving the above purposes, the technical schemes of the present invention are implemented as follows.

An access network system with separated control and bearer includes an access network control plane and an access network data plane which are separated from each other. The access network control plane receives control information separated from the access network data plane, exchanges the control information with a core network, and controls data transfer of the access network data plane. The access network data plane separates control information from data for traffic from a user network, transfers the control information to the access network control plane, and forwards the data from the user network/core network under control of the access network control plane. The access network control plane is a separated wired access network control plane or wireless access network control plane, or a converged access network control plane comprising a wired access network control plane and a wireless access network control plane. The access network data plane is a separated wired access network data plane or wireless access network data plane, or a converged access network data plane comprising a wired access network data plane and a wireless access network data plane;
wherein control function of the access network control plane is provided in a controller which implements control function of the access network, and function of the access network data plane is provided in an access node, AN; wherein the AN is an Optical Line Terminal, OLT and an Optical Network Unit, ONU;
the controller is connected to the AN by a reference point 3-C; the controller is connected to an edge node, EN, by a reference point 4; the AN is connected to the EN by a reference point 3-D; and the controller and the EN are connected to the core network by a reference point 6-C and a reference point 6-D, respectively;

the EN comprises an Enforcement Point, EP; the controller is an authenticator; the AN separates an authentication message or a DHCP message from an authentication supplicant at a CPN and transfers the message to the controller, and transfers an authentication message or a DHCP message sent from the controller to a user; the EN forwards data exchanged between the core network and the AN.A method for achieving communication by an access network system with separated control and bearer includes: separating, by an access network data plane, control information from data for a user uplink traffic, transferring the separated control information to an access network control plane for processing, and exchanging the control information with a core network; forwarding, by the access network data plane, the separated data and downlink data from the core network under control of the access network control plane. The access network control plane is a separated wired access network control plane or wireless access network control plane, or a converged access network control plane comprising a wired access network control plane and a wireless access network control plane. The access network data plane is a separated wired access network data plane or wireless access network data plane, or a converged access network data plane comprising a wired access network data plane and a wireless access network data plane;
wherein control function of the access network control plane is provided in a controller which implements control function of the access network, and function of the access network data plane is provided in an access node, AN; wherein the AN is an Optical Line Terminal, OLT and an Optical Network Unit, ONU;
the controller is connected to the AN by a reference point 3-C; the controller is connected to an edge node, EN, by a reference point 4; the AN is connected to the EN by a reference point 3-D; and the controller and the EN are connected to the core network by a reference point 6-C and a reference point 6-D, respectively;
the EN comprises an Enforcement Point, EP; the controller is an authenticator; the AN separates an authentication message or a DHCP message from an authentication supplicant at a CPN and transfers the message to the controller, and transfers an authentication message or a DHCP message sent from the controller to a user; the EN forwards data exchanged between the core network and the AN.

As can be seen from the technical schemes above, because the access network of the present invention implements separation of control and bearer, the network control method does not need to alter when the bearing technique changes, thereby improving the network extensibility and reducing the network maintenance cost. The control portion is separated from the existing bearing device to be a stand-alone controller, thereby reducing the cost of the bearing device significantly. Meanwhile, the controller is not constrained by the hardware of the bearing device, so as to establish a solid basis for better performance. The separated controller may readily provide more and stronger control functions by adding control function modules and new services may also be supported conveniently by adding new modules into the controller. Accordingly, the network extensibility is improved.

Moreover, in the access network with separated control and bearer, the controller may be upgraded solely to improve performance without influencing the bearing network device. The upgrading and changing of the bearing network device do not influence user's control, and user's administration control information does not need to alter due to the change of the bearing device, thus reducing the network maintenance cost dramatically.

Besides, based on the separation of the access network control plane and the access network data plane of the present invention, control planes of different bearing technologies may be converged together, so as to provide a uniform control plane for different bearing techniques. The uniform management for services from a plurality of different service providers may be supported with the uniform control plane, enabling the access network system of the present invention to be applicable for scenarios of multiple SPs, and solving the problems such as cross-region handoff and roaming for users. The uniform control plane achieves the uniform management for different access technologies, thus solving the problems such as handoff between different access technologies and roaming for users.

### BRIEF DESCRIPTION OF THE DRAWINGS

FIG. 1 is a schematic diagram of an access network with control and bearer separated from each other according to the present invention;
FIG. 2a is a network model of an access network of the present invention;
FIG. 2b is another network model of an access network of the present invention;
FIG. 3a is a first schematic diagram of an access network system of the present invention;
FIG. 3b is a second schematic diagram of an access network system of the present invention;
FIG. 3c is a third schematic diagram of an access network system of the present invention;
FIG. 4a is a first scenario of an access network implementing user authentication of the present invention;
FIG. 4b is a second scenario of an access network implementing user authentication of the present invention;
FIG. 4c is a third scenario of an access network implementing user authentication of the present invention;
FIG. 5 is a flowchart of user authentication based on an access network system of the present invention;
FIG. 6a is a first flowchart of a DHCP process;
FIG. 6b is a second flowchart of a DHCP process;
FIG. 7a is a first application scenario of an access network of the present invention in FTTx;
FIG. 7b is a second application scenario of an access network of the present invention in FTTx;
FIG. 7c is a third application scenario of an access network of the present invention in FTTx;
FIG. 8a is a first application scenario of an access network of the present invention in DSL;
FIG. 8b is a second application scenario of an access network of the present invention in DSL;
FIG. 8c is a third application scenario of an access network of the present invention in DSL;
FIG. 9a is a first application scenario of an access network of the present invention in a wireless network;
FIG. 9b is a second application scenario of an access network of the present invention in a wireless network; and
FIG. 9c is a third application scenario of an access network of the present invention in a wireless network.

### DETAILED DESCRIPTION

A scheme of the present invention is described as follows:

An access network including an access network control plane and an access network data plane which are separated from each other achieves separation of control and bearer. The access network control plane receives control information separated from the access network data plane, exchanges the control information with a core network, and controls data transfer of the access network data plane. The access network data plane separates control information from the data when dealing with the traffic from a user network, forwards the control information to the access network control plane, and forwards the data from the user network/core network under control of the access network control plane.

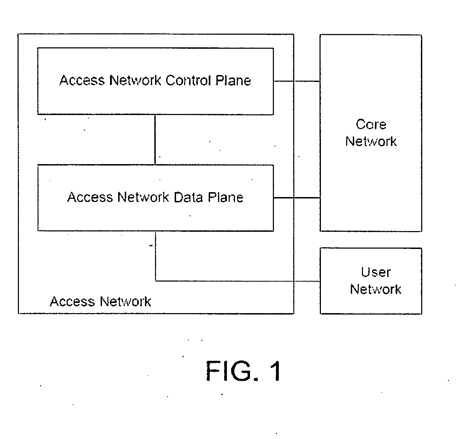

FIG. 1 is a schematic diagram of an access network with control and bearer separated from each other according to the present invention. As illustrated in FIG. 1, the access network includes an access network control plane (Access Network-CP) and an access network data plane (Access Network-DP) which are separated from each other, enabling the convergence of control planes with different bearing techniques, so as to provide a unified control plane for different bearing techniques. The access network control plane is integrated with control function of the access network, for receiving control information separated from the access network data plane, exchanging the control information with a core network, and controlling data transfer of the access network data plane. The control herein includes control of authentication, resources, admission and strategy, as well as control of data transfer of the access network data plane. These control functions may be provided in a controller. The access network data plane separates control information from data when dealing with the traffic from the user network, forwards the separated control information to the access network control plane, and forwards the data from the user network/core network to the core network/user network under control of the access network control plane. The separation belongs to prior art, such as separating the control information and data by a protocol number or a port number of a flow classification detection message, and is not repeated here for clarity.

The access network control plane may be an independent wired access network control plane or wireless access network control plane, or may be a converged access network control plane converging (including) a wired access network control plane and a wireless access network control plane, i.e., the wired access network control plane and the wireless access network control plane employ the same access network control plane. Then, the controller includes the function of a wired controller and a wireless controller, and the controller including the function of a wired controller and a wireless controller is referred to as a Fixed and Mobile Convergence (FMC) controller herein.

The access network data plane may be an independent wired access network data plane or wireless access network data plane, or may be a converged access network data plane converging (including) a wired access network data plane and a wireless access network data plane, i.e., the wired access network data plane and the wireless access network data plane employ the same access network data plane.

The access network control plane may be owned by a connectivity provider (ConP) or a network access provider (NAP), and the access network data plane may be owned by a network access provider; the wired/wireless core network may be owned by a wired service provider (SP)/wireless SP, and the wired/wireless core network may be converged to be owned by the same SP.

For further clarifying the purposes, technical schemes and advantages of the present invention, the present invention is further described in detail below with reference to the accompanying drawings and preferred embodiments.

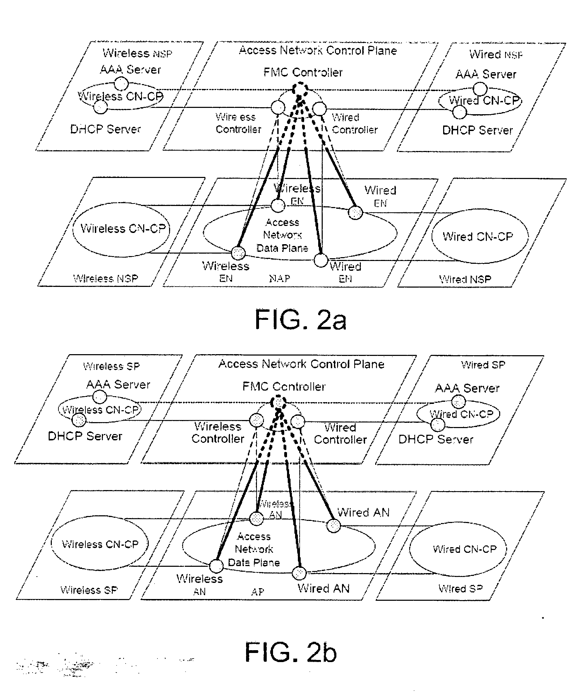

FIG. 2a is a network model of an access network with wired and wireless function employing a converged access network control plane and a converged access network data plane. In FIG. 2a, an access network control plane (Access Network-CP) includes a wired access network control plane and a wireless access network control plane, and an access network data plane (Access Network-DP) includes a wired access network data plane and a wireless access network data plane. FIG. 2a does not illustrate the wired/wireless access network control plane, or the wired/wireless access network data plane.

The wired access network control plane and the wired access network data plane form a wired access network, wherein the function of an edge node (EN), such as a broadband network gateway/broadband remote access server (BNG/BRAS), of the original wired access network are decomposed into two network elements, i.e., a wired controller and a wired EN. The wired controller has the control plane function of the EN of the original wired access network, including at least an authenticator and an Authentication/Authorization/Accounting Client (AAA Client) for implementing authentication function, handle of Dynamic Host Configuration Protocol (DHCP) relay/proxy, resources and admission control, and strategy control function, and may further including function such as: auto-configuration function of an auto-configuration server, residential gateway/routing gateway (RG) management, terminal and/or user device management in a user network, user private or temporary IP address assignment, an AAA agent or client, a Media Gateway Controller (MGC), as well as control function for handoff between wired access and wireless access, etc. The wired EN has the data plane function of the EN of the original wired access network. One-to-multiple or multiple-to-multiple connections may be employed between the wired controller and the wired EN.

The control function of the wired access network control plane is provided within the wired controller. For example, the AAA function separated from the BNG/BRAS is provided within the wired controller. The wired controller is connected to a control plane reference node of a core network (CN), and the wired EN of the wired access network data plane is connected to a data plane reference node of the CN.

The wireless access network control plane and the wireless access network data plane form a wireless access network, wherein the function of an EN, such as an Application Service Network Gateway (ASN GW), of the original wireless access network are decomposed into two network elements, i.e., a wireless controller and a wireless EN. The wireless controller has the control plane function of the EN of the original wireless access network, including at least an authenticator, an AAA client, DHCP relay/proxy, radio resource management resources and admission control, and strategy control function, and may further including functions such as handoff control, paging control, auto-configuration of an auto-configuration server, RG management, management function of terminals and/or user devices within a user network, user private or temporary address assignment, AAA agent, and MGC. In addition, the wireless controller may further include function of handoff control between wired access and wireless access, for achieving control of handoff between wired access and wireless access. The wireless EN has the data plane function of the EN of the original wireless access network. One-to-multiple or multiple-to-multiple connections may be employed between the wireless controller and the wireless EN.

The control function of the wireless access network control plane is provided within the wireless controller. For example, the AAA function separated from the ASN GW is provided within the wireless controller. The wireless controller is connected to the control plane reference node of the CN, and the wired EN of the wireless access network data plane is connected to the data plane reference node of the CN.

In FIG. 2a, the core network includes a wired core network and a wireless core network. The wired/wireless core network each has separated control and bearer, so as to introduce a wired/wireless core network control plane (CN-CP) and a wired/wireless core network data plane (CN-DP). The wired/wireless controller of the wired/wireless access network control plane is connected to a reference point of the wired/wireless core network control plane respectively, and the wired/wireless EN of the wired/wireless access network data plane is connected to the reference point of the wired/wireless core network data plane respectively. The wired core network may be owned by a wired service provider (SP), the wireless core network may be owned by a wireless SP, and the wired core network and the wireless core network may be converged to be owned by the same SP. In addition, the core network that converges a wired core network and a wireless core network is referred to as a converged core network herein. The architecture of the core network is not in the scope of the present invention, and is not described in detail.

As illustrated in FIG. 2a, the wired access network control plane and the wireless access network control plane employ the same access network control plane, the wired controller and the wireless controller may employ separated wired controller and wireless controller, or may employ an FMC controller (as illustrated by the dashed line and bold dashed line in FIG. 2a). The wired access network data plane and the wireless access network data plane employ the same access network data plane, the wired EN/wireless EN may employ a same access network data plane, and the wired AN/wireless AN may employ the same access network data plane (not shown in FIG. 2a). One-to-multiple or multiple-to-multiple connections may be employed between the FMC controller and the wired EN/wireless EN. The access network control plane may be owned by a connectivity provider, and the access network data plane may be owned by a network access provider.

FIG. 2b is another network model of an access network with wired and wireless function employing a converged access network control plane and a converged access network data plane. In FIG. 2b, the access network control plane includes a wired access network control plane and a wireless access network control plane, and the access network data plane includes a wired access network data plane and a wireless access network data plane. FIG. 2b does not illustrate the wired/wireless access network control plane, or the wired/wireless access network data plane. The distinctions of FIG. 2b from FIG. 2a are that the wired/wireless access network (AN) in the access network data plane is integrated with the function of the AN and EN of the original access network, the wired/wireless AN of the wired/wireless access network data plane is connected to a reference node of the data plane of the CN.

As illustrated in FIG. 2b, the wired AN/wireless AN/wired EN/wireless EN employs a converged access network data plane, one-to-multiple or multiple-to-multiple connections may be employed between the FMC controller and the wired AN/wireless AN/wired EN/wireless EN.

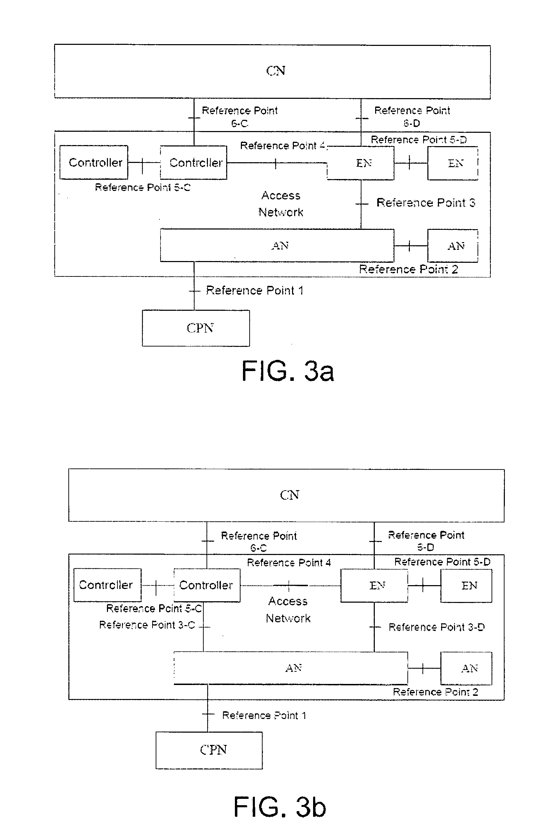

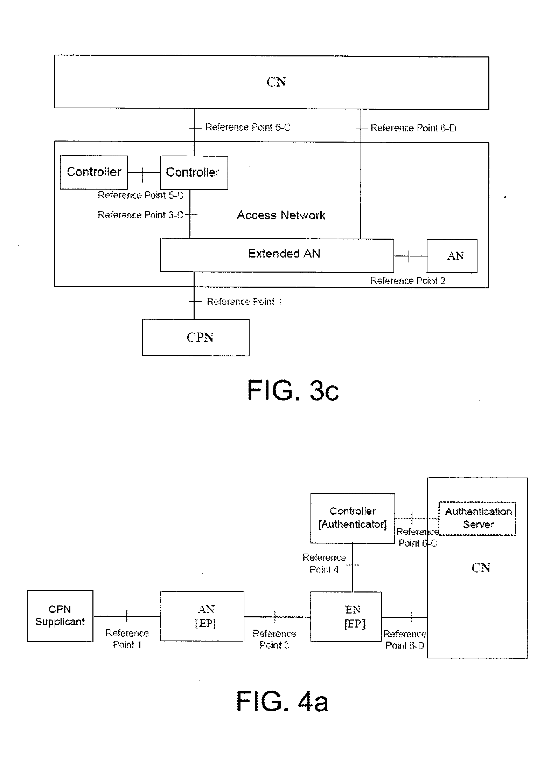

According to the network models of the two access networks with separated control and bearer as illustrated in FIG. 2a and FIG. 2b, the present invention provides architectures of three access networks as illustrated in FIG. 3a, FIG. 3b and FIG. 3c. In FIG. 3a - FIG. 3c, the ANs are wired ANs or wireless ANs, the ENs are wired ENs or wireless ENs, the controllers are wired controllers or wireless controllers or FMC controllers, and the CNs are wired CNs or wireless CNs or converged CNs including wired and wireless function; the access network control plane may support the fixed and mobile convergence in a form of separated control of a wired controller and a wireless controller, or support the fixed and mobile convergence in a form of collective control of an FMC controller. A reference point 1 between the CPN and an AN network element utilizes the reference point of the original access network; a reference point 2 is newly defined between the ANs for supporting communications between the ANs and adapting the requirements of communications based on Voice-over-Intemet-Protocol (VoIP) technologies and Peer-to-Peer. Reference point 2 is optional, and a reference point between wired ANs is 2a, a reference point between wireless ANs is 2b, and a reference point between a wired AN and a wireless AN is 2c.

FIG. 3a is a first structure schematic diagram of an access network system of the present invention. As illustrated in FIG. 3a, the separation of control information and data is completed by an EN. The EN transfers the control information, such as a control message or signaling, through a reference point 4 to the controller for processing, and forwards the data flow through a reference point 6-D to the CN under control of the controller. The AN may be an access node supporting two layers.

A reference point 3 is newly defined between AN and EN, wherein the AN connects a user to the access network by a reference point 3. A reference point between a wired AN and a wired EN is 3a which utilizes a reference point of the original wired access network. A reference point between a wireless AN and a wireless EN is 3b which utilizes a reference point of the original wireless access network; a reference point between a wired AN and a wireless EN is 3c. A reference point between a wireless AN and a wired EN is 3d.

A reference point 4 is newly defined between the controller and EN, wherein the controller delivers strategy parameters to the EN through the reference point 4, and administrates the EN by the Media Gateway Control (Megaco) Protocol of IETF or H.248 of ITU-T. A reference point between a wired EN and a wired controller/FMC controller is 4a, and a reference point between a wireless EN and a wireless controller/FMC controller is 4b.

A reference point 5-C is newly defined between the controllers, and the controllers coordinate and uniform the resources and admission control as well as strategy control of the access network via the reference point 5-C. Reference point 5-C is optional. A reference point between a wired controller and a wired controller/FMC controller is 5a-C, a reference point between a wireless controller and a wireless controller/FMC controller is 5b-C, a reference point between a wired controller and a wireless controller is 5c-C, and a reference point between FMC controllers is 5d-C.

A reference point 5-D is newly defined between ENs, and the ENs achieve loading sharing of communication traffic among ENs via the reference point 5-D. Reference point 5-D is optional. A reference point between wired ENs is 5a-D, a reference point between wireless ENs is 5b-D, and a reference point between a wired EN and a wireless EN is 5c-D.

A reference point 6-C is newly defined between the controller and CN, and the reference point 6-C is equivalent to a reference point portion between the original access network and the core network. A reference point between a wired controller and a wired CN/converged CN is 6a-C, a reference point between a wireless controller and a wireless CN/converged CN is 6b-C, a reference point between a wired controller and a wireless CN is 6c-C, a reference point between a wireless controller and a wired CN is 6d-C, and a reference point between an FMC controller and CN is 6e-C.

A reference point 6-D is newly defined between the EN and CN, and the reference point 6-D is equivalent to a reference point portion between the original access network and the core network. A reference point between a wired EN and a wired CN/converged CN is 6a-D, a reference point between a wireless EN and a wireless CN/converged CN is 6b-D, a reference point between a wired EN and a wireless CN is 6c-D, and a reference point between a wireless EN and a wired CN is 6d-D.

FIG. 3b is a second structure schematic diagram of an access network system of the present invention. As illustrated in FIG. 3b, the separation of control information and data is completed by an AN. The AN transfers the control information, such as a control message or signaling, through a reference point 3-C to the controller for processing, and forwards the data flow through a reference point 3-D to CN under control of the controller. Reference points 2, 5-C, and 5-D are optional. The AN may be an access node supporting IP awareness.

The distinctions of the structure shown in FIG. 3b from that shown in FIG. 3a are as follows.

A reference point 3-C is newly defined between the AN and the controller, and the reference point 3-C is equivalent to a reference point portion between the AN and the access network edge node, such as a BNG/BRAS/ASN GW, of the original wired access network, and is configured for information exchanging between the AN and the controller. A reference point between a wired AN and a wired controller/FMC controller is 3a-C, and a reference point between a wireless AN and a wireless controller/FMC controller is 3b-C.

A reference point 3-D is newly defined between the AN and EN, and the reference point 3-D is equivalent to a reference point portion between the AN and the access network edge node, such as a BNG/BRAS/ASN GW, of the original wired access network, and is configured for information exchanging between the AN and EN. A reference point between a wired AN and a wired EN is 3a-D, a reference point between a wireless AN and a wireless EN is 3b-D, a reference point between a wired AN and a wireless EN is 3c-D, and a reference point between a wireless AN and a wired EN is 3d-D.

FIG. 3c is a third structure schematic diagram of an access network system of the present invention. As illustrated in FIG. 3c, function of EN is integrated in AN. The separation of control information and data is completed by the AN integrated with EN function. The AN integrated with EN function is referred to as an extended AN in the present invention. The extended AN transfers the control information through a reference point 3-C to the controller for processing, and forwards the data flow through a reference point 6-D to CN under control of the controller. Reference points 2 and 5-C are optional and the AN may be an access node supporting IP routing. Meanwhile, as illustrated in FIG. 3c, reference points 5-D, 4 and 3-D do not exist because the ENs are integrated in the extended AN. In addition, the EN function may be integrated in the core network. Then, the controller is connected to the AN via a reference point 3-C, and the controller and AN are connected to the core network via a reference point 6-C and a reference point 3-D, respectively.

It should be clarified that the different names for the reference points in FIG. 3a - FIG. 3c are not intended to limit the reference points, but to distinguish the different reference points only.

For users to communicate by the access network having separated control and bearer of the present invention, a method includes: separating control information from data when dealing with user uplink traffic at the access network data plane, transferring the separated control information to the access network control plane for processing, exchanging the control information with the core network, and forwarding the separated data and downlink data from the core network under control of the access network control plane.

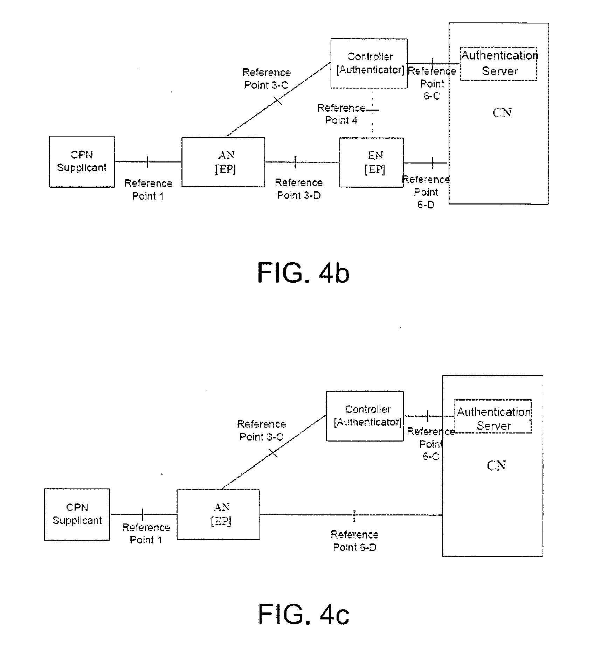

Take user authentication with the access network of the present invention as an example, the implementing process is described below in detail. FIG. 4a, FIG. 4b and FIG. 4c illustrate scenario examples of user authentication processes in a real network, respectively.

FIG. 4a is a first structure scenario of an access network implementing user authentication of the present invention. As shown in FIG. 4a, AN and EN may set Enforcement Points (EPs), thus the function, such as user's access control and strategy control, may be implemented within both the AN and EN. The EN also performs Relay/Proxy function: the Relay/Proxy needs to separate control information, e.g., a control message and signaling, from all flows and transfers the control information to the controller. For example, the EN separates an authentication message or a DHCP message from an authentication supplicant at a Customer Premise Network (CPN) and transfers the message to the controller. The authentication message or DHCP message sent from the controller to the user is also transferred by the EN. The separating method here belongs to prior art, such as separating by a protocol number or a port number of a flow classification detection message, and is not repeated herein.

FIG. 4b is a second structure scenario of an access network implementing user authentication of the present invention. As shown in FIG. 4b, there is a reference point 3-C between AN and the controller. The Relay/Proxy function in EN may be implemented in AN, i.e., the AN transfers the authentication message or DHCP message via reference point 3-C. EP may be implemented in the AN or EN.

FIG. 4c is a third structure scenario of an access network implementing user authentication of the present invention. As shown in FIG. 4c, AN performs the function of Relay/Proxy and EP, while the EN (not shown in FIG. 4c) neither involves in user authentication, nor supports EP.

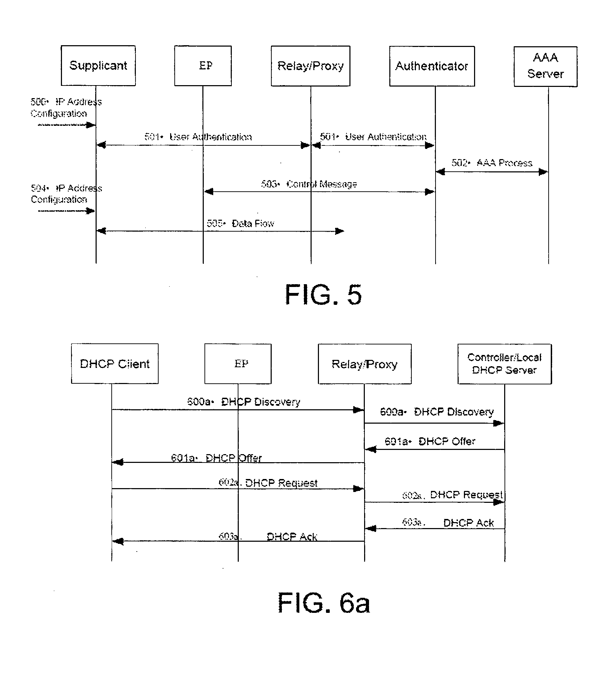

FIG. 5 is a flowchart of user authentication based on an access network system of the present invention. As shown in FIG. 5, a Supplicant is an applicant of user authentication; EP is an Enforcement Point for performing user access control, i.e., accessing the authenticated user and denying access of other users; an Authenticator is an authenticating party for authenticating and authorizing users, and for conforming user's authentication information and authorities by an authentication server (AS), such as an AAA server. The AS verifies the user's information and returns the authentication result back to the Authenticator, and may further return corresponding control information such as bandwidth and strategy for the authenticated user. The function of Relay/Proxy includes transferring authentication information between the Supplicant and the Authenticator. The authentication method of the present invention includes the following steps.

### Step 500: IP address configuration.

The user may configure the IP Address dynamically or statically, and this step is optional. Step 500 may be desired for certain authentication manners, such as the Protocol for carrying Authentication for Network Access (PANA).

### Step 501: user authentication.

The Authenticator authenticates the Supplicant, and messages exchanging between thereof during the authentication process is detected and transferred by the Relay/Proxy. The Relay/Proxy detects the authentication message by separating control information such as a control message and signaling from the received flow. The detection method here belongs to prior art, such as detecting by a protocol number and a port number of a flow classification detect message.

At step 502, the Authenticator inquires the AAA server for user information, so as to authenticate and obtain a relevant strategy.

At step 503, the Authenticator delivers control information such as the access authority of the authenticated user to the EP. Meanwhile, the Authenticator may inquire and maintain the control information of the EP.

At step 504, if desired by the authenticated user, an IP address may be configured, typically a dynamic address configuration.

If not desired, this step may be omitted.

At step 505, a data flow from the authenticated user is forwarded across the EP.

Although the authentication method belongs to the prior art, what is emphasized here is the corporation between the access network control plane and access network data plane when authentication is implemented in the access network having separated control and bearer of the present invention.

During the user authentication in step 501 above, the authentication may be a process of a standard protocol, e.g., using PANA, 802.1X, etc., or may be a DHCP request. The detection for authentication message by the Relay/Proxy may be detection for an authentication protocol message, such as detection for a PANA message, an IEEE802.1X protocol message, or a Point-to-Point Protocol over Ethernet (PPPoE) message, may be detection for a broadcast message, such as detection for a DHCP request, or may be detection for a message with unknown source IP address or other message in a manner not illustrated in the present invention. For example, PANA is employed as an authentication mechanism in the scenario constituting an access network shown in FIG. 4a - FIG. 4c. The corresponding relationships between entities in the authentication process described in FIG. 5 and respective entities in PANA are as follows. The Supplicant corresponds to a PANA Client (PaC), the EP corresponds to EP, the Authenticator corresponds to a PANA Authentication Agent

(PaA), and the AAA server corresponds to AS. For a further example, 802.1X is employed as an authentication mechanism in the scenario constituting an access network shown in FIG. 4a- FIG. 4c. The corresponding relationships between entities in the authentication process described in FIG. 5 and respective entities in 802.1X are as follows. The Supplicant corresponds to a Supplicant, EP corresponds to an Access Controller according to 802.1X, the Authenticator corresponds to an Authenticator, and the AAA server corresponds to AS.

In a real network, the Authenticator and the AAA Server may be in one physical entity, or may be provided in two different physical entities respectively; EP may be provided in either AN or EN; Relay/Proxy may be provided in one or more physical entities, and the physical entity in which the Relay/Proxy resides may also have EP being provided. EP and Relay/Proxy may be in the same physical entity or may be provided in different physical entities respectively.

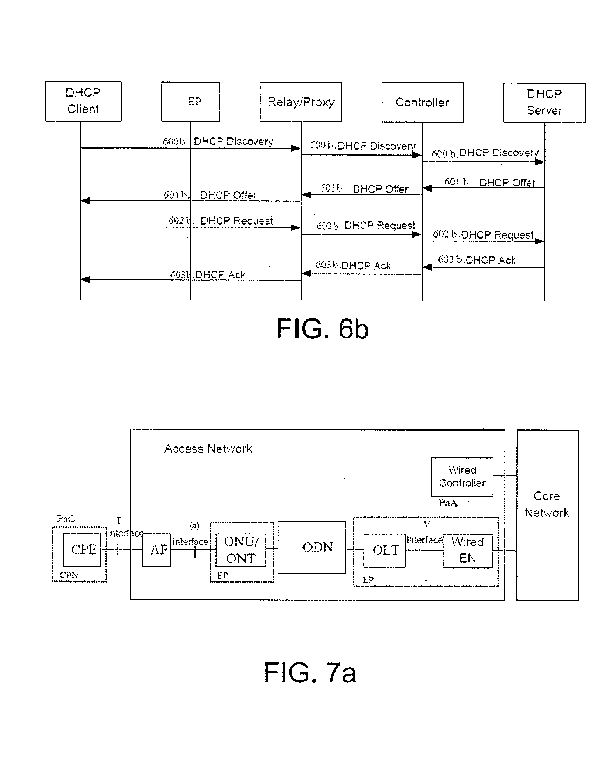

During the user authentication process as illustrated in FIG. 5, in step 500 or step 504, the user may configure an IP address statically or dynamically. In case of dynamic configuration, the configuration may be implemented by the process shown in FIG. 6a or FIG. 6b. FIG. 6a is a first flowchart of a DHCP process. Assuming that the controller includes a local DHCP server, as shown in FIG. 6a, an unauthenticated user without an IP address uses the local DHCP server to assign an address, and the Relay/Proxy transfers a DHCP message. The DHCP process between the user and the controller shown in FIG. 6a is a standard DHCP process, the detail description for which may be seen in the relevant specification and thus is not repeated here.

FIG. 6b is a second flowchart of a DHCP process. As shown in FIG. 6b, the distinction from FIG. 6a is that the controller and the DHCP server are entities separated from each other. The DHCP process between the user and the DHCP server is a standard DHCP process, the detail description for which may be seen in the relevant specification and thus is not repeated here.

The constitution of an access network with separated control and bearer and the method for a user to communicate by the access network of the present invention, have been introduced above. As can be seen from the access network of the present invention, because control and bearer are separated in the access network, the network control method does not need to change when the bearing technique changes, thereby improving the network extensibility while reducing the network maintenance cost.

The control portion is separated from the existing bearing device to be a stand-alone controller, thereby reducing the cost of the bearing device significantly. Meanwhile, the controller is not constrained by the hardware of the bearing device, so as to establish a solid basis for better performance. The separated controller may readily provide more and stronger control function by adding control function modules, and new services may also be supported conveniently by adding new modules into the controller, hence, the network extensibility is improved.

Moreover, the controller may be upgraded solely to improve performance without influencing the bearing network device; the upgrading and changing of the bearing network device do not influence user control, and the user administration control information does not need to alter due to the change of the bearing device, thus reducing the network maintenance cost significantly.

Besides, based on the separation of the access network control plane and the access network data plane of the present invention, control planes of different bearing technologies may be converged together, so as to provide a uniform control plane for different bearing technologies. The uniform management for services from a plurality of different service providers may be supported with the uniform control plane, enabling the access network system of the present invention to be applicable for scenarios of multiple SPs, and solving the problems such as cross-region handoff and roaming for users. The uniform control plane achieves the uniform management for different access technologies, thus solving the problems such as handoff between different access technologies and roaming for users.

The architecture of the present invention provides different stages of evolvement from the existing network architecture, including the different stages of AN supporting IP awareness, three layers, etc. As shown in FIG. 3, FIG. 3a adds a controller in the existing network architecture to separate the control function from EN; FIG. 3b further adds a reference point 3-C between the AN and the controller based on FIG. 3a, for the control message or signaling to be transferred to the controller via AN or EN. Both the AN and EN may implement EP; based on FIG. 3b, FIG. 3c removes the EN nodes, and the reference points between EN and the controller as well as between EN and AN, wherein the function of EN are integrated in AN, and wherein the reference point between the original EN and CN becomes a reference point between AN and CN. The architecture of the present invention is applicable for new services such as VoIP and Peer-to-Peer.

The applications of the present invention in Fiber-to-the-x (FTTx), such as FTTB, FTTC and FTTH, in digital subscriber loop (DSL) and in wireless network are described in conjunction with the real networks as examples.

FIG. 7a is a first scenario of applying an access network of the present invention in FTTx. FIG. 7a is a network structure of applying FIG. 3a in FTTx. In connection with FIG. 3a, a wired controller is the controller, an Optical fiber Network Unit/Optical fiber Network Terminal (ONU/ONT) is the AN, and a wired EN is the EN. An Optical Line Terminal (OLT) does not belong to AN, and may be combined with the wired EN together into a same physical entity EP. A Customer Premise Equipment (CPE), an Optical Distribution Network (ODN) and Adaptation Function (AF) in FIG. 7a are existing entities, wherein the ODN provides an optical transmission medium for OLT and ONU as a physical connection between thereof, and the AF implements adaption function between optical access and other access technologies or services. In addition, the OLT and the wired EN may be provided in a same physical entity and collectively referred to as a wired EN. Then, the wired controller is the controller, the ONU/ONT is the AN, and the OLT establishes connection with the controller.

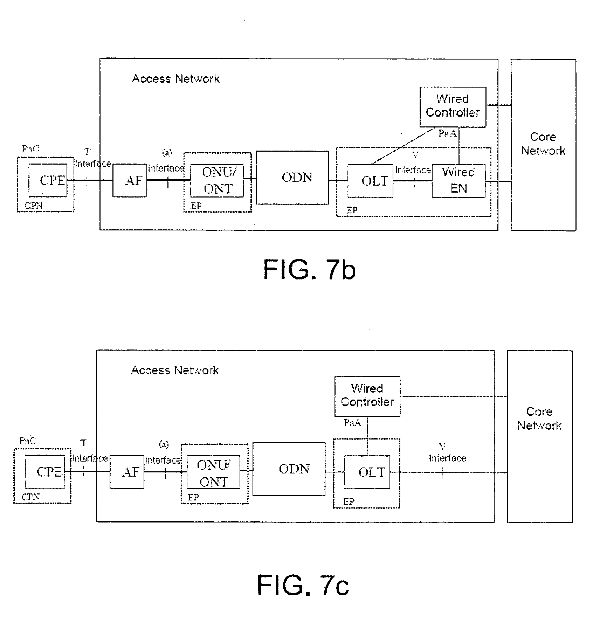

FIG. 7b is a second scenario of applying an access network of the present invention in FTTx. FIG. 7b is a network structure of applying FIG. 3b in FTTx. In connection with FIG. 3b, a wired controller is the controller, OLT is the AN, and a wired EN is the EN. In addition, the OLT and the wired EN may be provided in a same physical entity and collectively referred to as a wired EN. Then, the wired controller is the controller, the ONU/ONT is the AN, and the AN as well as the wired EN establish connections with the wired controller, respectively.

FIG. 7c is a third scenario of applying an access network of the present invention in FTTx. FIG. 7c is a network structure of applying FIG. 3c in FTTx. In connection with FIG. 3b, a wired controller is the controller, and ONU/ONT and OLT are configured as an AN/extended AN.

Interfaces T, (a) and V in FIG. 7a-FIG. 7c are interfaces in the prior art. Because a control plane and a bearing plane are not separated in the existing network, the existing interfaces above include reference points of the control plane and reference points of the bearing plane.

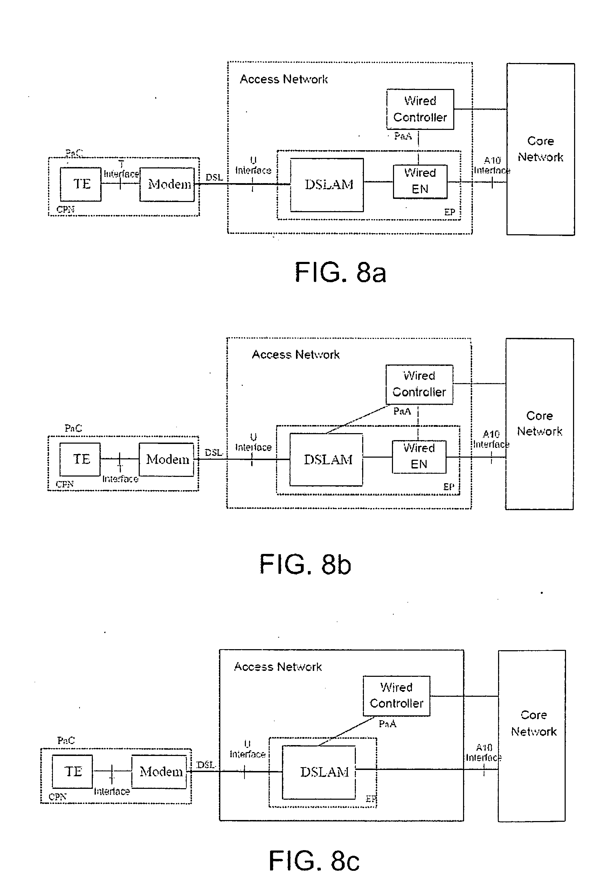

FIG. 8a is a first scenario of applying an access network of the present invention in DSL. FIG. 8a is a network structure of applying FIG. 3a in DSL. In connection with FIG. 3a, a wired controller is the controller, a Digital Subscriber Line Access Multiplexer (DSLAM) is the AN, and a wired EN is the EN.

FIG. 8b is a second scenario of applying an access network of the present invention in DSL. FIG. 8b is a network structure of applying FIG. 3b in FTTx. In connection with FIG. 3b, a wired controller is the controller, DSLAM is the AN, and a wired EN is the EN. Distinct from FIG. 8a, the wired controller is connected with the DSLAM.

FIG. 8c is a third scenario of applying an access network of the present invention in DSL. FIG. 8c is a network structure of applying FIG. 3c in FTTx. In connection with FIG. 3c, a wired controller is the controller, and DSLAM is the AN/extended AN.

Interfaces U, V, A10 in FIG. 8a-FIG.8c are interfaces in the existing networks, and have the following corresponding relationships with the reference points in FIG. 3a: The interface U corresponds to reference point 1, the interface V corresponds to reference point 3, and the interface A10 corresponds to reference point 6. Because a control plane and a bearing plane are not separated in the existing network, the existing interfaces above include reference points of the control plane and reference points of the bearing plane.

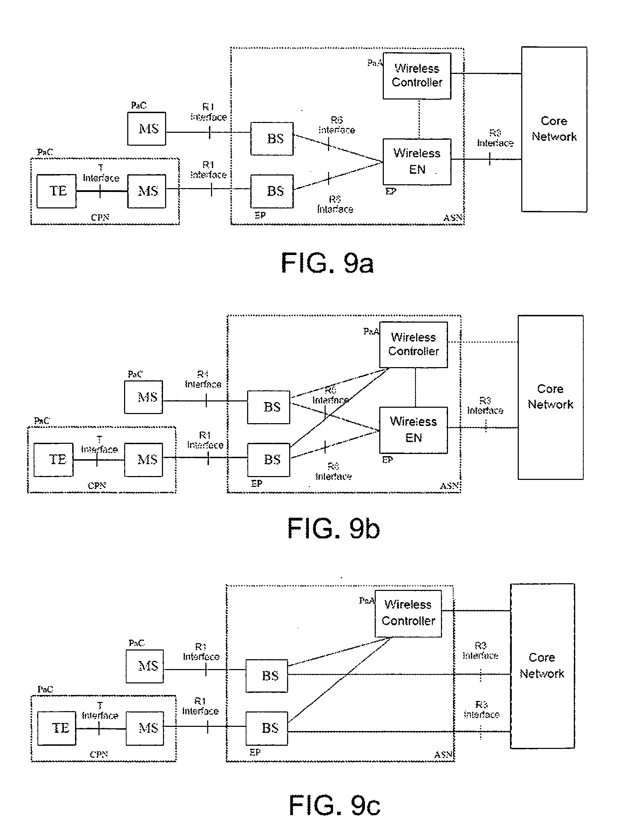

FIG. 9a is a first scenario of applying an access network of the present invention in a wireless network. FIG. 9a is a network structure of applying FIG. 3a in DSL. In connection with FIG. 3a, a wireless controller is the controller, a base station (BS) is the AN, and a wireless EN is the EN.

FIG. 9b is a second scenario of applying an access network of the present invention in a wireless network. FIG. 9b is a network structure of applying FIG. 3b in DSL. In connection with FIG. 3b, a wireless controller is the controller, BS is the AN, and a wireless EN is the EN. Distinct from FIG. 8a, the wireless controller is connected with the BS.

FIG. 9c is a third scenario of applying an access network of the present invention in a wireless network. FIG. 9c is a network structure of applying FIG. 3c in FTTx. In connection with FIG. 3c, a wireless controller is the controller, and BS is the AN/extended AN.

Interfaces R1, R3 and R6 in FIG. 9a-FIG. 9c are interfaces in the existing networks, and have the following corresponding relationships with the reference points in FIG. 3a: the interface R1 corresponds to reference point 1, the interface R6 corresponds to reference point 3, and the interface R3 corresponds to reference point 6. Because a control plane and a bearing plane are not separated in the existing network, the existing interfaces above include reference points of the control plane and reference points of the bearing plane.

The wired controllers in FIG. 7a-FIG. 7c and FIG. 8a-FIG. 8c, as well as the wireless controllers in FIG. 9a-FIG. 9c above may be implemented with FMC controllers.

The foregoing are exemplary embodiments of the present invention, rather than to limit the protection scope of the present invention.

## Claims

1. An access network system with separated control and bearer, comprising: an access network control plane and an access network data plane which are separated from each other, wherein
the access network control plane receives control information separated from the access network data plane, exchanges the control information with a core network, and controls data transfer of the access network data plane; and
the access network data plane separates control information from data for traffic from a user network, transfers the control information to the access network control plane, and forwards the data from the user network/core network under control of the access network control plane, wherein the access network is **characterized in that**:
the access network control plane is a separated wired access network control plane, or a converged access network control plane comprising a wired access network control plane and a wireless access network control plane; and
the access network data plane is a separated wired access network data plane, or a converged access network data plane comprising a wired access network data plane and a wireless access network data plane;
wherein control function of the access network control plane is provided in a controller which implements control function of the access network, and function of the access network data plane is provided in an access node, AN; wherein the AN is an Optical Line Terminal, OLT and an Optical Network Unit, ONU;
the controller is connected to the AN and to an edge node, EN; the AN is connected to the EN; and the controller and the EN are connected to the core network;
the EN comprises an Enforcement Point, EP; the controller is an authenticator; the AN separates an authentication message or a DHCP message from an authentication supplicant at a Customer Premise Network and transfers the message to the controller, and transfers an authentication message or a DHCP message sent from the controller to a user; the EN forwards data exchanged between the core network and the AN.

2. The system of claim 1, **characterized in that**, control function of the access network control plane is provided in a controller which implements control function of the access network, and function of the access network data plane is provided in an edge node, EN;
the controller is connected to the EN; the EN is connected to an existing access node, AN; and the controller and the EN are connected to the core network, respectively.

3. The system of claim 1, **characterized in that,** control function of the access network control plane is provided in a controller which implements control function of the access network, and function of the access network data plane is provided in an access node, AN;
the controller is connected to the AN; the controller is connected to an edge node, EN; the AN is connected to the EN; and the controller and the EN are connected to the core network, respectively.

4. The system of claim 2, **characterized in that**, the access network system is applied in an optical fiber access network;
the controller is a wired controller/a fixed and mobile converged, FMC, controller; the AN is an optical fiber network unit/optical fiber network terminal, ONU/ONT, in the optical fiber access network; and the EN is a wired EN integrated with an Optical Line Terminal OLT;
or the controller is a wired controller/FMC controller; the AN is OLT in the optical fiber access network; and the EN is a wired EN.

5. The system of claim 3, **characterized in that**, the access network system is applied in an optical fiber access network;
the controller is a wired controller/FMC controller; the AN is an Optical Line Terminal, OLT, in the optical fiber access network; and the EN is a wired EN;
or the controller is a wired controller/a fixed and mobile converged, FMC, controller; the AN is ONU/ONT in the optical fiber access network; the EN is a wired EN; and OLT in the optical fiber access network is provided in the wired EN.

6. The system of claim 2, **characterized in that**, the existing AN and EN each comprises an Enforcement Point, EPthe controller is an authenticator; the EN separates an authentication message or a Dynamic Host Configuration Protocol, DHCP, message from an authentication supplicant at a customer premise network, Customer Premise Network and transfers the message to the controller, and transfers an authentication message or a DHCP message sent from the controller to the supplicant; the EN forwards data exchanged between the core network and the AN;
the AN is connected to the EN, the EN is connected to the controller, the EN is connected to the core network, and the controller is connected to an authentication server in the core network.

7. The system of claim 2, or 3, **characterized in that**, the control function in the controller comprises authenticator function, Authentication/Authorization/Accounting AAA agent or client function, Dynamic Host Configuration Protocol DHCP relay/proxy handling function, wireless and/or wired resource and admission control, and strategy control function.

8. The system of claim 3, **characterized in that**, the AN or EN comprises an Enforcement Point EP; the controller is an authenticator; the AN separates an authentication message or a DHCP message from an authentication supplicant at a Customer Premise Network and transfers the message to the controller, and transfers an authentication message or a DHCP message sent from the controller to a user; the EN forwards data exchanged between the core network and the AN;
the AN is connected to the EN, the AN is connected to the controller, the EN is connected to the controller, the EN is connected to the core network, and the controller is connected to an authentication server in the core network.

9. A method for achieving communication by an access network system with separated control and bearer, **characterized in** comprising:
separating, by an access network data plane, control information from data for user's uplink traffic, transferring the separated control information to an access network control plane for processing, and exchanging the control information with a core network, wherein the access network control plane is a separated wired access network control plane or wireless access network control plane, or a converged access network control plane comprising a wired access network control plane and a wireless access network control plane; and the access network data plane is a separated wired access network data plane or wireless access network data plane, or a converged access network data plane comprising a wired access network data plane and a wireless access network data plane; and
forwarding, by the access network data plane, the separated data and downlink data from the core network under control of the access network control plane;
wherein control function of the access network control plane is provided in a controller which implements control function of the access network, and function of the access network data plane is provided in an access node, AN; wherein the AN is an Optical Line Terminal, OLT and an Optical Network Unit, ONU;
the controller is connected to the AN and to an edge node, EN; the AN is connected to the EN; and the controller and the EN are connected to the core network;
the EN comprises an Enforcement Point, EP; the controller is an authenticator; the AN separates an authentication message or a DHCP message from an authentication supplicant at a Customer Premise Network and transfers the message to the controller, and transfers an authentication message or a DHCP message sent from the controller to a user; the EN forwards data exchanged between the core network and the AN.

10. The method of claim 9, **characterized in** comprising a step of authenticating the user by an authenticator prior to the method;
separating and transferring, by the access network data plane, an authentication message exchanged between the user and the authenticator.

11. The method of claim 9, **characterized in** further comprising configuring an IP address statically or dynamically by the user.

## Patentansprüche

1. Zugangsnetzsystem mit getrennter Steuerung und getrenntem Träger, das Folgendes umfasst: eine Zugangsnetzsteuerebene und eine Zugangsnetzdatenebene, die voneinander getrennt sind, wobei
die Zugangsnetzsteuerebene Steuerinformationen empfängt, die von der Zugangsnetzdatenebene getrennt sind, die Steuerinformationen mit einem Kernnetz austauscht und die Datenübertragung der Zugangsnetzdatenebene steuert; und
die Zugangsnetzdatenebene Steuerinformationen von Daten für Verkehr aus einem Anwendernetz trennt, die Steuerinformationen zu der Zugangsnetzsteuerebene überträgt und die Daten aus dem Anwendernetz/Kernnetz unter Steuerung der Zugangsnetzsteuerebene weiterleitet, wobei das Zugangsnetz **dadurch gekennzeichnet ist, dass**:
die Zugangsnetzsteuerebene eine getrennte drahtgebundene Zugangsnetzsteuerebene ist oder eine konvergierte Zugangsnetzsteuerebene ist, die eine drahtgebundene Zugangsnetzsteuerebene und eine drahtlose Zugangsnetzsteuerebene umfasst; und
die Zugangsnetzdatenebene eine getrennte drahtgebundene Zugangsnetzdatenebene ist oder eine konvergierte Zugangsnetzdatenebene ist, die eine drahtgebundene Zugangsnetzdatenebene und eine drahtlose Zugangsnetzdatenebene umfasst;
wobei die Steuerfunktion der Zugangsnetzsteuerebene in einer Steuereinheit bereitgestellt ist, die eine Steuerfunktion des Zugangsnetzes implementiert, und die Funktion der Zugangsnetzdatenebene in einem Zugangsknoten (access node, AN) bereitgestellt ist; wobei der AN ein Endgerät für optische Leitung (Optical Line Terminal, OLT) und eine Abschlusseinheit für optisches Netz (Optical Network Unit, ONU) ist;
die Steuereinheit mit dem AN und einem Grenzknoten (edge node, EN) verbunden ist; der AN mit dem EN verbunden ist; und die Steuereinheit und der EN mit dem Kernnetz verbunden sind;
der EN einen Durchführungspunkt (Enforcement Point, EP) umfasst; die Steuereinheit eine Authentifizierungseinheit ist; der AN eine Authentifizierungsnachricht oder eine DHCP-Nachricht von einem Authentifizierungsanforderer in einem Kundennetz abtrennt und die Nachricht zu der Steuereinheit überträgt und eine Authentifizierungsnachricht oder eine DHCP-Nachricht, die von der Steuereinheit gesendet wird, zu einem Anwender überträgt; der EN zwischen dem Kernnetz und dem AN ausgetauschte Daten weiterleitet.

2. System nach Anspruch 1, **dadurch gekennzeichnet, dass** die Steuerfunktion der Zugangsnetzsteuerebene in einer Steuereinheit, die eine Steuerfunktion des Zugangsnetzes implementiert, bereitgestellt ist und die Funktion der Zugangsnetzdatenebene in einem Grenzknoten, EN, bereitgestellt ist;
die Steuereinheit mit dem EN verbunden ist; der EN mit einem vorhandenen Zugangsknoten, AN, verbunden ist; und die Steuereinheit und der EN jeweils mit dem Kernnetz verbunden sind.

3. System nach Anspruch 1, **dadurch gekennzeichnet, dass** die Steuerfunktion der Zugangsnetzsteuerebene in einer Steuereinheit, die eine Steuerfunktion des Zugangsnetzes implementiert, bereitgestellt ist und die Funktion der Zugangsnetzdatenebene in einem Zugangsknoten, AN, bereitgestellt ist;
die Steuereinheit mit dem AN verbunden ist; die Steuereinheit mit einem Grenzknoten, EN, verbunden ist; der AN mit dem EN verbunden ist; und die Steuereinheit und der EN jeweils mit dem Kernnetz verbunden sind.

4. System nach Anspruch 2, **dadurch gekennzeichnet, dass** das Zugangsnetzsystem in einem Lichtleiterzugangsnetz eingesetzt wird;
die Steuereinheit eine drahtgebundene Steuereinheit/eine fest-mobil-konvergierte Steuereinheit, FMC-Steuereinheit, ist; der AN eine Lichtleiternetzeinheit bzw. ein Lichtleiternetzendgerät, ONU/ONT, in dem Lichtleiterzugangsnetz ist; und der EN ein drahtgebundener EN ist, der in einem Endgerät für optische Leitung, OLT, integriert ist;
oder die Steuereinheit eine drahtgebundene Steuereinheit/FMC-Steuereinheit ist; der AN ein OLT in dem Lichtleiterzugangsnetz ist; und der EN ein drahtgebundener EN ist.

5. System nach Anspruch 3, **dadurch gekennzeichnet, dass** das Zugangsnetzsystem in einem Lichtleiterzugangsnetz eingesetzt ist;
die Steuereinheit eine drahtgebundene Steuereinheit/FMC-Steuereinheit ist; der AN ein Endgerät für optische Leitung, OLT, in dem Lichtleiterzugangsnetz ist; und der EN ein drahtgebundener EN ist;
oder die Steuereinheit eine drahtgebundene Steuereinheit/eine fest-mobil-konvergierte Steuereinheit, FMC-Steuereinheit, ist; der AN ein ONU/ONT in dem Lichtleiterzugangsnetz ist; der EN ein drahtgebundener EN ist; und das OLT in dem Lichtleiterzugangsnetz in dem drahtgebundenen EN bereitgestellt ist.

6. System nach Anspruch 2, **dadurch gekennzeichnet, dass** der vorhandene AN und EN beide einen Durchführungspunkt, EP, umfassen, die Steuereinheit eine Authentifizierungseinheit ist; der EN eine Authentifizierungsnachricht oder eine Nachricht des dynamischen Host-Konfigurationsprotokolls, DHCP-Nachricht, von einem Authentifizierungsanforderer in einem Kundennetz abtrennt und die Nachricht zu der Steuereinheit überträgt und eine Authentifizierungsnachricht oder eine DHCP-Nachricht, die von der Steuereinheit gesendet wird, zu dem Anforderer überträgt; der EN die zwischen dem Kernnetz und dem AN ausgetauschten Daten weiterleitet;
der AN mit dem EN verbunden ist, der EN mit der Steuereinheit verbunden ist, der EN mit dem Kernnetz verbunden ist und die Steuereinheit mit einem Authentifizierungsserver in dem Kernnetz verbunden ist.

7. System nach Anspruch 2 oder 3, **dadurch gekennzeichnet, dass** die Steuerfunktion in der Steuereinheit die Authentifizierungsfunktion, die Authentifizierungs/Berechtigungs/Gebührenberechnungs-Agenten- oder Klienten-Funktion, AAA-Agenten- oder Klienten-Funktion, die Weitergabe/Proxy-Behandlungsfunktion des dynamischen Hostkonfigurationsprotokolls, DHCP-Weitergabe/Proxy-Behandlungsfunktion, die drahtlose und/oder drahtgebundene Betriebsmittel- und Zugangssteuerung und die Strategiesteuerfunktion umfasst.

8. System nach Anspruch 3, **dadurch gekennzeichnet, dass** der AN oder EN einen Durchführungspunkt, EP, umfasst; die Steuereinheit eine Authentifizierungseinheit ist; der AN eine Authentifizierungsnachricht oder eine DHCP-Nachricht von einem Authentifizierungsanforderer in einem Kundennetz abtrennt und die Nachricht zu der Steuereinheit überträgt und eine Authentifizierungsnachricht oder eine DHCP-Nachricht, die von der Steuereinheit gesendet wird, zu einem Anwender überträgt; der EN die zwischen dem Kernnetz und dem AN ausgetauschten Daten weiterleitet; der AN mit dem EN verbunden ist, der AN mit der Steuereinheit verbunden ist, der EN mit der Steuereinheit verbunden ist, der EN mit dem Kernnetz verbunden ist und die Steuereinheit mit einem Authentifizierungsserver in dem Kernnetz verbunden ist.

9. Verfahren zum Erreichen von Kommunikation durch ein Zugangsnetzsystem mit getrennter Steuerung und getrenntem Träger, **dadurch gekennzeichnet, dass** es Folgendes umfasst:
Trennen durch eine Zugangsnetzdatenebene von Steuerinformationen von Daten für den Aufwärtsstreckenverkehr des Anwenders, Übertragen der abgetrennten Steuerinformationen zum Verarbeiten zu einer Zugangsnetzsteuerebene und
Austauschen der Steuerinformationen mit einem Kernnetz, wobei die Zugangsnetzsteuerebene eine getrennte drahtgebundene Zugangsnetzsteuerebene ist oder eine drahtlose Zugangsnetzsteuerebene ist oder eine konvergierte Zugangsnetzsteuerebene ist, die eine drahtgebundene Zugangsnetzsteuerebene und
eine drahtlose Zugangsnetzsteuerebene umfasst; und die Zugangsnetzdatenebene eine getrennte drahtgebundene Zugangsnetzdatenebene oder eine drahtlose Zugangsnetzdatenebene oder eine konvergierte Zugangsnetzdatenebene ist, die eine drahtgebundene Zugangsnetzdatenebene und eine drahtlose Zugangsnetzdatenebene umfasst; und
Weiterleiten durch die Zugangsnetzdatenebene der getrennten Daten und Abwärtsstreckendaten aus dem Kernnetz unter Steuerung der Zugangsnetzsteuerebene;
wobei die Steuerfunktion der Zugangsnetzsteuerebene in einer Steuereinheit bereitgestellt ist, die eine Steuerfunktion des Zugangsnetzes implementiert, und die Funktion der Zugangsnetzdatenebene in einem Zugangsknoten, AN, bereitgestellt ist;
wobei der AN ein Endgerät für optische Leitung, OLT, und eine Abschlusseinheit für optisches Netz, ONU, ist;
die Steuereinheit mit dem AN und einem Grenzknoten, EN, verbunden ist; der AN mit dem EN verbunden ist; und die Steuereinheit und der EN mit dem Kernnetz verbunden sind;
der EN einen Durchführungsknoten, EP, umfasst; die Steuereinheit eine Authentifizierungseinheit ist; der AN eine Authentifizierungsnachricht oder eine DHCP-Nachricht von einem Authentifizierungsanforderer in einem Kundennetz abtrennt und die Nachricht zu der Steuereinheit überträgt und eine Authentifizierungsnachricht oder eine DHCP-Nachricht, die von der Steuereinheit gesendet wird, zu einem Anwender überträgt; der EN die zwischen dem Kernnetz und dem AN ausgetauschten Daten weiterleitet.

10. Verfahren nach Anspruch 9, **dadurch gekennzeichnet, dass** es einen Schritt des Authentifizierens des Anwender durch eine Authentifizierung vor dem Verfahren;
Trennen und Übertragen durch die Zugangsnetzdatenebene einer Authentifizierungsnachricht, die zwischen dem Anwender und der Authentifizierungseinheit ausgetauscht wird, umfasst.

11. Verfahren nach Anspruch 9, **dadurch gekennzeichnet, dass** es ferner das statische oder dynamische Konfigurieren einer IP-Adresse durch den Anwender umfasst.

## Revendications

1. Système de réseau d'accès à contrôle et transport séparés, comprenant : un plan de contrôle de réseau d'accès et un plan de données de réseau d'accès qui sont séparés l'un de l'autre, où :
le plan de contrôle de réseau d'accès reçoit des informations de contrôle séparées du plan de données de réseau d'accès, échange les informations de contrôle avec un réseau central, et contrôle un transfert de données du plan de données de réseau d'accès ; et
le plan de données de réseau d'accès sépare des informations de contrôle des données pour un trafic depuis un réseau d'utilisateur, transfère les informations de contrôle vers le plan de contrôle de réseau d'accès, et transfère les données depuis le réseau d'utilisateur/réseau central, sous contrôle du plan de contrôle de réseau d'accès, où le réseau d'accès est **caractérisé en ce que** :
le plan de contrôle de réseau d'accès est un plan de contrôle de réseau d'accès câblé séparé, ou un plan de contrôle de réseau d'accès convergent comprenant un plan de contrôle de réseau d'accès câblé et un plan de contrôle de réseau d'accès sans fil ; et
le plan de données de réseau d'accès est un plan de données de réseau d'accès câblé séparé, ou un plan de données de réseau d'accès convergent comprenant un plan de données de réseau d'accès câblé et un plan de données de réseau d'accès sans fil ;
où la fonction de contrôle du plan de contrôle de réseau d'accès est fournie par un contrôleur qui met en oeuvre une fonction de contrôle du réseau d'accès, et une fonction du plan de données de réseau d'accès est fournie dans un noeud d'accès, AN ; où l'AN est un terminal de ligne optique, OLT et une unité de réseau optique, ONU;
le contrôleur est connecté à l'AN et à un noeud périphérique, EN ; l'AN est connecté à l'EN ; et le contrôleur et l'EN sont connectés au réseau central ;
l'EN comprend un point d'application, EP ; le contrôleur est un authentificateur ; l'AN sépare un message d'authentification ou un message DHCP d'un suppliant d'authentification au niveau d'un réseau de locaux d'abonné et transfère le message au contrôleur, et transfère un message d'authentification ou un message DHCP envoyé depuis le contrôleur à un utilisateur ; l'EN transfère des données échangées entre le réseau central et l'AN.

2. Système selon la revendication 1, **caractérisé en ce que** la fonction de contrôle du plan de contrôle de réseau d'accès est fournie par un contrôleur qui met en oeuvre une fonction de contrôle du réseau d'accès, et une fonction du plan de données de réseau d'accès est fournie dans un noeud périphérique, EN ;
le contrôleur est connecté à l'EN ; l'EN est connecté à un noeud d'accès existant, AN ; et le contrôleur et l'EN sont connectés au réseau central, respectivement.

3. Système selon la revendication 1, **caractérisé en ce que** la fonction de contrôle du plan de contrôle de réseau d'accès est fournie par un contrôleur qui met en oeuvre une fonction de contrôle du réseau d'accès, et une fonction du plan de données de réseau d'accès est fournie dans un noeud d'accès, AN ;
le contrôleur est connecté à l'AN ; le contrôleur est connecté à un noeud périphérique, EN ; l'AN est connecté à l'EN ; et le contrôleur et l'EN sont connectés au réseau central, respectivement.

4. Système selon la revendication 2, **caractérisé en ce que** le système de réseau d'accès est appliqué dans un réseau d'accès à fibre optique ;
le contrôleur est un contrôleur câblé/un contrôleur convergent mobile et fixe, FMC ; l'AN est une unité de réseau à fibre optique/un terminal de réseau à fibre optique, ONU/ONT, dans le réseau d'accès à fibre optique ; et l'EN est un EN câblé intégré à un terminal de ligne optique, OLT ;
ou le contrôleur est un contrôleur câblé/un contrôleur FMC ; l'AN est un OLT dans le réseau d'accès à fibre optique ; et l'EN est un EN câblé.

5. Système selon la revendication 3, **caractérisé en ce que** le système de réseau d'accès est appliqué dans un réseau d'accès à fibre optique ;
le contrôleur est un contrôleur câblé/un contrôleur FMC ; l'AN est un terminal de ligne optique, OLT, dans le réseau d'accès à fibre optique ; et l'EN est un EN câblé ; ou le contrôleur est un contrôleur câblé/un contrôleur convergent mobile et fixe, FMC ; l'AN est une ONU/un ONT dans le réseau d'accès à fibre optique ; l'EN est un EN câblé ; et l'OLT dans le réseau d'accès à fibre optique est fourni dans l'EN câblé.

6. Système selon la revendication 2, **caractérisé en ce que** les AN et EN existants comprennent chacun un point d'application, EP, le contrôleur est un authentificateur ; l'EN sépare un message d'authentification ou un message de protocole de configuration dynamique de l'hôte, DHCP, d'un suppliant d'authentification au niveau d'un réseau de locaux d'abonné, et transfère le message au contrôleur, et transfère un message d'authentification ou un message DHCP envoyé depuis le contrôleur au suppliant ; l'EN transfère des données échangées entre le réseau central et l'AN ;
l'AN est connecté à l'EN, l'EN est connecté au contrôleur, l'EN est connecté au réseau central, et le contrôleur est connecté à un serveur d'authentification dans le réseau central.

7. Système selon la revendication 2 ou la revendication 3, **caractérisé en ce que** la fonction de contrôle dans le contrôleur comprend une fonction d'authentificateur, une fonction client ou agent Authentification/Autorisation/comptabilité, AAA, une fonction de gestion de mandataire/relais de protocole de configuration dynamique de l'hôte, DHCP, une fonction de contrôle d'admission et ressource câblée et/ou sans fil, et une fonction de contrôle stratégique.

8. Système selon la revendication 3, **caractérisé en ce que** l'AN ou l'EN comprend un point d'application EP ; le contrôleur est un authentificateur ; l'AN sépare un message d'authentification ou un message DHCP d'un suppliant d'authentification au niveau d'un réseau de locaux d'abonné et transfère le message au contrôleur, et transfère un message d'authentification ou un message DHCP envoyé depuis le contrôleur à un utilisateur ; l'EN transfère des données échangées entre le réseau central et l'AN ;
l'AN est connecté à l'EN, l'AN est connecté au contrôleur, l'EN est connecté au contrôleur, l'EN est connecté au réseau central, et le contrôleur est connecté à un serveur d'authentification dans le réseau central.

9. Procédé pour accomplir une communication par l'intermédiaire d'un système de réseau d'accès à contrôle et transport séparés, **caractérisé en ce qu'**il comprend les étapes suivantes :
séparer, par l'intermédiaire d'un plan de données de réseau d'accès, des informations de contrôle de données pour un trafic de liaison montante d'utilisateur, transférer les informations de contrôle séparées vers un plan de contrôle de réseau d'accès pour traitement, et échanger les informations de contrôle avec un réseau central, où le plan de contrôle de réseau d'accès est un plan de contrôle de réseau d'accès câblé séparé ou un plan de contrôle de réseau d'accès sans fil, ou un plan de contrôle de réseau d'accès convergent comprenant un plan de contrôle de réseau d'accès câblé et un plan de contrôle de réseau d'accès sans fil ; et le plan de données de réseau d'accès est un plan de données de réseau d'accès câblé séparé ou un plan de données de réseau d'accès sans fil, ou un plan de données de réseau d'accès convergent comprenant un plan de données de réseau d'accès câblé et un plan de données de réseau d'accès sans fil ; et
transférer, par l'intermédiaire du plan de données de réseau d'accès, les données séparées et les données de liaison descendante du réseau central sous contrôle du plan de contrôle de réseau d'accès ;
où la fonction de contrôle du plan de contrôle de réseau d'accès est fournie par un contrôleur qui met en oeuvre une fonction de contrôle du réseau d'accès, et une fonction du plan de données de réseau d'accès est pourvue dans un noeud d'accès, AN ; où l'AN est un terminal de ligne optique, OLT, et une unité de réseau optique, ONU;
le contrôleur est connecté à l'AN et à un noeud périphérique, EN ; l'AN est connecté à l'EN ; et le contrôleur et l'EN sont connectés au réseau central ;
l'EN comprend un point d'application, EP ; le contrôleur est un authentificateur ;
l'AN sépare un message d'authentification ou un message DHCP d'un suppliant d'authentification au niveau d'un réseau de locaux d'abonné et transfère le message au contrôleur, et transfère un message d'authentification ou un message DHCP envoyé depuis le contrôleur à un utilisateur ; l'EN transfère des données échangées entre le réseau central et l'AN.

10. Procédé selon la revendication 9, **caractérisé en ce qu'**il comprend une étape d'authentification de l'utilisateur par l'intermédiaire d'un authentificateur antérieurement au procédé ;
séparer et transférer, par l'intermédiaire du plan de données de réseau d'accès, un message d'authentification échangé entre l'utilisateur et l'authentificateur.

11. Procédé selon la revendication 9, **caractérisé en ce qu'**il comprend en outre la configuration d'une adresse IP de manière statique ou dynamique par l'utilisateur.
